(19) Europäisches Patentamt
European Patent Office
Office européen des brevets

(11) **EP 4 073 610 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **20828266.5**

(22) Anmeldetag: **11.12.2020**

(51) Internationale Patentklassifikation (IPC):
***G05D 16/20*** *(2006.01)*

(52) Gemeinsame Patentklassifikation (CPC):
**G05D 16/2024; G05D 16/204**

(86) Internationale Anmeldenummer:
**PCT/DE2020/101053**

(87) Internationale Veröffentlichungsnummer:
**WO 2021/121475 (24.06.2021 Gazette 2021/25)**

(54) **VENTILANORDNUNG UND VERFAHREN ZUR DRUCKREGELUNG EINES FLUIDS**

VALVE ASSEMBLY AND METHOD FOR REGULATING THE PRESSURE OF A FLUID

ENSEMBLE VANNE ET PROCÉDÉ DE RÉGULATION DE LA PRESSION D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2019   DE 102019134613**

(43) Veröffentlichungstag der Anmeldung:
**19.10.2022   Patentblatt 2022/42**

(73) Patentinhaber: **Aventics GmbH**
**30880 Laatzen (DE)**

(72) Erfinder:
• **BUSCH, Christian**
**30659 Hannover (DE)**
• **TADJE, Stefan**
**30161 Hannover (DE)**

(74) Vertreter: **Spahn, Tobias et al**
**BBS Bier Brehm Spahn**
**Partnerschaft Rechtsanwälte**
**Brandstwiete 46**
**20457 Hamburg (DE)**

(56) Entgegenhaltungen:
EP-A1- 3 699 437        WO-A1-2013/144598
US-A1- 2005 087 238

## Beschreibung

### Technisches Gebiet

Die Erfindung betrifft eine Ventilanordnung und ein Verfahren zur Druckregelung eines Fluids.

### Stand der Technik

Im Stand der Technik fluidtechnischer Steuerungs- oder Regelungssysteme ist anwendungsspezifisch häufig die Einhaltung und Gewährleistung eines bestimmten, über die Zeit gegebenenfalls veränderlichen Soll- oder Mindestdrucks in einem verbundenen Volumen erforderlich, beispielsweise zur Sicherstellung einer ausreichenden Reaktionsgeschwindigkeit und/oder Schließkraft von Werkzeugen (Laser-Schneiden, Schweißzangensteuerung), zur fehlerfreien räumlichen Ausformung einer Behälterblase bei der Blasformung von Behältern aus Vorformlingen oder zur ausreichend schnellen Wiederbefüllung eines Tanks oder eines Speichers. Zur Realisierung derartiger exakter pneumatischer Steuerungs- oder Regelungsaufgaben werden im Stand der Technik häufig Proportionalventile mit einem veränderbarem Öffnungsquerschnitt eingesetzt. Der maximal herstellbare Öffnungsquerschnitt eines grundsätzlich geeigneten Proportionalventils kann sich hierbei in konkreten Anwendungen jedoch als nicht ausreichend zur Gewährleistung eines bestimmten Soll- oder Mindestdrucks in Bezug auf bestimmte spezielle Systemzustände (bspw. das Fertigblasen eines Behälters oder die schnelle Wiederbefüllung eines Tanks) erweisen. Insbesondere gilt dies bei der Druckbeaufschlagung von offenen Volumen, beispielsweise von Schneiddüsen oder Blenden mit einem Prozessgas beim Laserschneiden oder die Bereitstellung eines hinreichenden Kühlluftstroms nach dem Fertigblasen von Glasflaschen. Im Rahmen einer effizienten Systemauslegung und gewünschten Gleichteilverwendung kann hierbei die parallele Anordnung eines zusätzlichen Schaltventils ("Booster") für solche Systemzustände vorzugswürdig gegenüber einer höheren Leistungsauslegung des Proportionalventils sein. Eine derartige Systemgestaltung hat den weiteren Vorteil, dass sich die Erhöhung der maximalen Systemleistung nicht zu Lasten der Steuerungs- oder Regelungsgenauigkeit im Leistungsbereich des Proportionalventils auswirkt. Hierbei stellt sich jedoch die Aufgabe der effektiven funktionalen Integration des zusätzlichen Schaltventils.

Die WO 2013/135838 A1 offenbart eine Ventilanordnung zur Streckblasformung von Behältern, bei welchem neben einem Proportionalventil zusätzlich ein Schaltventil oder mehrere Schaltventile zur Beaufschlagung des Formlings mit einem erhöhten Druckniveau vorgesehen ist oder sind. Zur Betätigung der Ventile schlägt die WO 2013/135838 A1 eine zeitbasierte oder von der Position einer Reckstange abhängige Steuerung vor, ferner wird offenbart, das Proportionalventil bei Erreichen eines Druck-Schwellenwerts im Formling abzuschalten. Mittel zur vorzeitigen Bestimmung des mit dem Proportionalventil maximal erreichbaren Arbeitsdruckniveaus oder zur Früherkennung der Unterschreitung eines Soll- oder Mindestdrucks sind nicht offenbart. Ferner ist die Bereitstellung und Integration einer anwendungsspezifisch hinreichend geeigneten Sensorik zur Erfassung des tatsächlichen Drucks in einem expandierenden Formling konstruktiv relativ aufwändig.

Die EP 0 666 792 B1 offenbart eine Drucksteuer- und/oder Regelvorrichtung für ein einem Spritzgießwerkzeug außer der Kunststoffschmelze zuzuführendes fluidisches Medium, bei der mehrere von einem Druckerzeuger zu einem Einspritzsystem führende, parallele Strömungswege vorgesehen sind, welche jeweils mit je einem Medienzustrom-Steuerventil ausgestattet sind. Die Medienzustrom-Steuerventile können Proportionalventile sein. Die Medienzustrom-Steuerventile sind über einen PID-Regler und eine Logik-Schaltung derart ansteuerbar, dass eine Schaltung auf Sperrung oder Durchlass in Abhängigkeit von einem mit einem Drucksensor in der Kavität des Spritzgießwerkzeugs erfassten Druckgradienten erfolgt. Mittel zur vorzeitigen Bestimmung des mit dem Proportionalventil maximal erreichbaren Arbeitsdruckniveaus oder zur Früherkennung der Unterschreitung eines Soll- oder Mindestdrucks sind nicht offenbart. Zudem ist die Bereitstellung und Integration einer anwendungsspezifisch geeigneten Sensorik zur Erfassung des tatsächlichen Drucks in der Kavität des Spritzgusswerkzeugs konstruktiv verhältnismäßig aufwändig.

Die DE 10 2010 035 747 A1 die DE 27 51 743 C2 und die US 5 329 965 A offenbaren Ventilanordnungen mit mehreren parallel geschalteten elektrisch betätigbaren Einzelventilen, die in einem Regelkreis angeordnet sind. Die offenbarten Ventilanordnungen sind konstruktiv relativ aufwendig ausgestaltet. Mittel zur vorzeitigen Bestimmung des mit dem Proportionalventil maximal erreichbaren Arbeitsdruckniveaus oder zur Früherkennung der Unterschreitung eines Soll- oder Mindestdrucks sind nicht offenbar

Andere ähnliche Ventilanordnungen sind aus folgenden Dokumenten bekannt: US 2005/087238 A1 und EP 3699437 A1.

### Offenbarung der Erfindung

Der Erfindung liegt die Aufgabe zu Grunde, eine Ventilanordnung zur Druckregelung eines Fluids mit einem Proportionalventil zu schaffen, bei der durch konstruktiv einfache Maßnahmen die Einhaltung eines bestimmten Soll- oder Mindestdrucks in einem mit dieser verbindbaren Volumen gewährleistet ist und mit welcher die Nachteile des Stands der Technik vermieden werden.

Die Aufgabe wird erfindungsgemäß durch eine Ventilanordnung zur Druckregelung eines Fluids nach Anspruch 1 und ein Verfahren zur Druckregelung eines Fluids nach Anspruch 6 gelöst. Vorteilhafte Weiterbildungen der Erfindung sind in den Unteransprüchen angegeben.

Der Kern der Erfindung bildet eine Ventilanordnung zur Druckregelung eines Fluids, mit einem Proportionalventil, aufweisend einen durch ein Stellglied kontinuierlich veränderbaren Öffnungsquerschnitt, ein Sensormittel zur Erfassung des Ventilausgangsdrucks, mit einer digitalen Regelungseinrichtung, sowie mit einem parallel zum Proportionalventil angeordneten Schaltventil, wobei der Öffnungsquerschnitt des Schaltventils kleiner ist, als der maximale Öffnungsquerschnitt des Proportionalventils und bei welcher die Regelungseinrichtung programmtechnisch eingerichtet ist, zur Laufzeit automatisiert anhand des aktuell gegebenen Ventilausgangsdrucks, der aktuellen Position des Stellglieds den bei maximaler Öffnungsweite des Proportionalventils mit diesem maximal erreichbaren Arbeitsdruck zu berechnen und bei einem Unterschreiten eines vorgebbaren Soll-Arbeitsdrucks durch den berechneten, maximal erreichbaren Arbeitsdruck um einen bestimmbaren Abweichungswert zusätzlich das Schaltventil zu öffnen. Die Berechnung basiert auf einer modellhaften Abbildung des fluidtechnischen Anwendungssystems auf der Arbeitsseite des Proportionalventils. Hierzu umfasst die programmtechnische Einrichtung der Regelungseinrichtung Anweisungen, mit denen ein dem jeweiligen Anwendungssystem entsprechendes, gemäß den allgemeinen Gesetzmäßigkeiten der Strömungsmechanik gebildetes, geeignetes technisches Berechnungsmodell abgebildet ist. Das Berechnungsmodell kann hierbei näherungsweise vereinfacht sein. Im einfachsten Anwendungsfall entspricht in dem Berechnungsmodell der Arbeitsdruck dem erfassten Ventilausgangsdruck. Der Abweichungswert kann im einfachsten Anwendungsfall "0" sein, wodurch die Öffnung des Schaltventils erfolgt, sobald der berechnete, maximal erreichbare Arbeitsdruck den vorgebbaren Soll-Arbeitsdrucks unterschreitet. Zur Dynamisierung des Schaltverhaltens wird der Abweichungswert größer ungleich 0 bestimmt, wodurch das Schaltverhalten zeitlich vorverlagert wird, das Öffnen des Schaltventils also bereits vor dem Unterschreiten des vorgebbaren Soll-Arbeitsdrucks durch den maximal erreichbaren Arbeitsdruck erfolgt.

Die Erfindung hat erkannt, dass im Rahmen einer effizienten Systemauslegung einer Ventilanordnung mit einem Proportionalventil die Einhaltung eines bestimmten Soll- oder Mindestdrucks in einem mit dieser verbindbarem Volumen konstruktiv einfach gewährleistet ist, wenn der anhand des jeweils aktuellen Systemzustands maximal erreichbare Arbeitsdruck zur Laufzeit berechnet und abhängig von der Berechnung bei einem erkannten drohenden Unterschreiten des Soll- oder Mindestdrucks zusätzlich ein parallel zu dem Proportionalventil angeordnetes Schaltventil geöffnet wird. Eine entsprechend ausgestaltete Ventilanordnung ermöglicht ferner auf konstruktiv einfache Weise eine effiziente und genaue Druckregelung in einem verbundenen Volumen mit der Einhaltung eines bestimmten Soll- oder Mindestdrucks, insbesondere an einem offenen Volumen.

Abhängig vom jeweiligen pneumatischen Anwendungssystem wird zur Erhöhung der Genauigkeit des Berechnungsergebnisses bei der Berechnung des maximal erreichbaren Arbeitsdrucks zusätzlich der pneumatische Widerstand (Strömungswiderstand) der weiteren Leitungsführung vom Ventilausgang bis zum Leitungsende auf der Arbeitsseite der Ventilanordnung berücksichtigt. Im Rahmen des technisches Berechnungsmodells ist diese Größe beispielsweise näherungsweise als zu bestimmende Konstante berücksichtigbar.

Zur weiteren Erhöhung der Genauigkeit des Berechnungsergebnisses bei der Berechnung des maximal erreichbaren Arbeitsdrucks zusätzlich die Ausflusscharakteristik des Leitungsendes auf der Arbeitsseite der Ventilanordnung berücksichtigt. Dies kann je nach fluidtechnischer Anwendung beispielsweise eine Blende oder Düse sein, deren Ausflusscharakteristik im Rahmen des technisches Berechnungsmodells beispielsweise näherungsweise als zu bestimmende Konstante berücksichtigbar ist.

Eine weitere Erhöhung der Genauigkeit des Berechnungsergebnisses bei der Berechnung des maximal erreichbaren Arbeitsdrucks ist dadurch erreicht, dass bei der Berechnung des maximal erreichbaren Arbeitsdrucks zusätzlich der mit der Vergrößerung des Öffnungsquerschnitts des Proportionalventils eintretende Versorgungsdruckabfall, das heißt der hierbei auf der Strecke zwischen der Versorgungsquelle bis zum Ventileingang eintretende Druckabfall, berücksichtigt ist.

Zur Stabilisierung des Regelungsverhaltens der Ventilanordnung ist bei der Bestimmung des Öffnungszeitpunkts des Schaltventils eine Schalthysterese berücksichtigt.

Einen weiteren Kern der Erfindung bildet ein Verfahren zur Druckregelung eines Fluids durch eine Ventilanordnung mit einem Proportionalventil, aufweisend einen durch ein Stellglied kontinuierlich veränderbaren Öffnungsquerschnitt und ein Sensormittel zur Erfassung des Ventilausgangsdrucks, mit einer digitalen Regelungseinrichtung, sowie mit einem parallel zum Proportionalventil angeordneten Schaltventil, wobei der Öffnungsquerschnitt des Schaltventils kleiner ist, als der maximale Öffnungsquerschnitt des Proportionalventils, wobei durch die digitale Regelungseinrichtung zur Laufzeit automatisiert anhand des aktuell gegebenen Ventilausgangsdrucks und der aktuellen Position des Stellglieds der bei maximaler Öffnungsweite des Proportionalventils mit diesem maximal erreichbaren Arbeitsdruck berechnet und mit einem vorgebbaren Soll-Arbeitsdruck verglichen wird und bei einem Unterschreiten des vorgebbaren Soll-Arbeitsdrucks durch den berechneten, maximal erreichbaren Arbeitsdruck um einen bestimmbaren Abweichungswert die Generierung einer Stellgröße zur zusätzlichen Öffnung des Schaltventils erfolgt.

Zur Erhöhung der Genauigkeit des Berechnungsergebnisses wird bei der Berechnung des maximal erreichbaren Arbeitsdrucks zusätzlich der pneumatische Widerstand (Strömungswiderstand) der weiteren Leitungsführung vom Ventilausgang bis zum Leitungsende berücksichtigt.

Zur weiteren Erhöhung der Genauigkeit des Berechnungsergebnisses bei der Berechnung des maximal erreichbaren Arbeitsdrucks zusätzlich die Ausflusscharakteristik des Leitungsendes berücksichtigt. Dies kann je nach fluidtechnischer Anwendung beispielsweise eine Blende oder Düse sein, deren Ausflusscharakteristik im Rahmen des technisches Berechnungsmodells beispielsweise näherungsweise als zu bestimmende Konstante berücksichtigbar ist.

Eine weitere Erhöhung der Genauigkeit des Berechnungsergebnisses bei der Berechnung des maximal erreichbaren Arbeitsdrucks ist dadurch erreicht, dass bei der Berechnung des maximal erreichbaren Arbeitsdrucks zusätzlich der mit der Vergrößerung des Öffnungsquerschnitts des Proportionalventils eintretende Versorgungsdruckabfall berücksichtigt ist.

Zur Stabilisierung des Regelungsverhaltens der Ventilanordnung wird bei der Bestimmung des Öffnungszeitpunkts des Schaltventils eine Schalthysterese berücksichtigt.

Weitere Vorteile der Erfindung sind nachstehend gemeinsam mit der Beschreibung eines bevorzugten Ausführungsbeispiels der Erfindung anhand der Figuren näher dargestellt. Es zeigen:

Fig. 1     ein Ersatzschaltbild einer pneumatischen Ventilanordnung;

Fig. 2     ein elektrisches Äquivalenzschaltbild der Ventilanordnung nach Fig. 1;

Fig. 3     ein Diagramm zur Veranschaulichung der Zusammensetzung der von der Ventilanordnung abgegebenen Luftmenge.

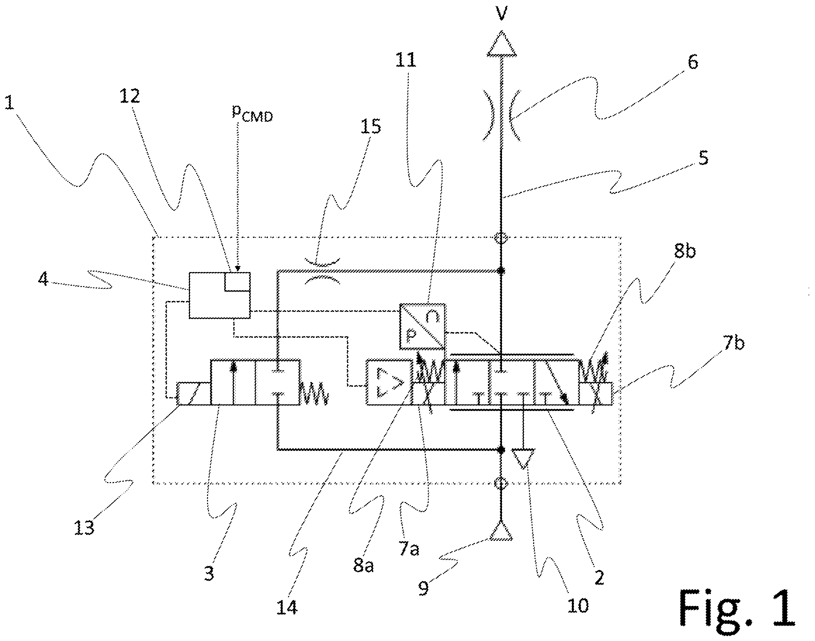

Fig. 1 zeigt ein vereinfachtes pneumatisches Ersatzschaltbild der Ventilanordnung 1. Die Ventilanordnung 1 umfasst das Proportionalventil 2, das Schaltventil 3 und den Mikrocontroller 4. Die wesentlichen Funktionskomponenten der Ventilanordnung 1 sind in einem gemeinsamen - durch eine gestrichelte Umrahmung symbolisierten - Gehäuse ausgebildet. Die Ventilanordnung 1 ist über die Arbeitsleitung 5 mit einem Volumen V (in Fig. 1 nicht näher dargestellt) verbunden, das ein offenes Volumen ist, wie beispielsweise der Bearbeitungskopf einer Laserschneidvorrichtung. Hierzu mündet die Arbeitsleitung 5 an ihrem Leitungsende in das Volumen V, wobei das Leitungsende der Arbeitsleitung 5 im Ausführungsbeispiel gemäß der Fig. 1 als offene Blende 6 ausgestaltet ist, die am Leitungsende eine sprungartige Querschnittsverengung beschreibt. Das Proportionalventil 2 ist als ein 3/3-Wege-Proportionalventil ausgestaltet. In seiner Ruhestellung im stromlosen Zustand nimmt das Proportionalventil 2 seine gesperrte Mittelstellung (NC) ein, in der die Arbeitsleitung 5 abgesperrt ist. Zur Beaufschlagung der Arbeitsleitung 5 ist das Proportionalventil 2 durch den Proportionalmagneten 7a entgegen der Federbelastung der mechanischen Rückstellfeder 8b in eine erste Schaltstellung schaltbar, in welcher es mit einem veränderbaren Ventilöffnungsquerschnitt die Arbeitsleitung 5 mit der Druckluftversorgung 9 verbindet. Zur Entlüftung der Arbeitsleitung 5 ist das Proportionalventil 2 durch den Proportionalmagneten 7b entgegen der Federbelastung der mechanischen Rückstellfeder 8a in eine zweite Schaltstellung schaltbar, in welcher es mit einem veränderbaren Ventilöffnungsquerschnitt die Arbeitsleitung 5 mit der Entlüftung 10 verbindet. Die elektrische Ansteuerung der Proportionalmagneten 7a und 7b erfolgt über den in das Gehäuse der Ventilanordnung 1 integrierten Mikrocontroller 4, der als digitale Regelungseinrichtung der Ventilanordnung 1 dient. Der Mikrocontroller 4 ist als "singleboard computer (SBC)" ausgebildet, bei dem sämtliche zum Betrieb nötigen elektronischen Komponenten (CPU, Speicher, Ein- und Ausgabeschnittstellen, A/D-Wandler, DMA-Controller, usw.) auf einer einzigen Leiterplatte zusammengefasst sind. Der Mikrocontroller 4 erhält vom Drucksensor 11 ein kontinuierliches elektrisches Signal, das den jeweils aktuellen Ventilausgangsdruck am Proportionalventil 2 repräsentiert. Der Mikrocontroller 4 ist ferner mit der Datenkommunikationsschnittstelle 12 ausgebildet, mit welcher er mit einer übergeordneten speicherprogrammierbaren Anlagensteuerung (SPS, in Fig. 1 nicht näher dargestellt) verbindbar ist. Von der speicherprogrammierbaren Anlagensteuerung erhält der Mikrocontroller 4 zur Laufzeit einen dynamisch vorgebbaren Soll-Arbeitsdruck $p_{CMD}$. Der Mikrocontroller 4 ist programmtechnisch eingerichtet, zur Laufzeit automatisiert anhand des aktuell gegebenen Ventilausgangsdrucks und der ihm aus dem aktuellen Ansteuerungszustand bekannten aktuellen Position des Stellglieds des Proportionalventils 2 den bei maximaler Öffnungsweite des Proportionalventils jeweils maximal erreichbaren Arbeitsdruck zu berechnen und mit dem jeweils vorgegebenen Solldruck zu vergleichen. Ferner ist der Mikrocontroller 4 programmtechnisch eingerichtet, bei einem Unterschreiten des aktuell vorgegebenen Soll-Arbeitsdrucks $p_{CMD}$ durch den berechneten, maximal erreichbaren Arbeitsdruck um einen bestimmbaren Abweichungswert zusätzlich das Schaltventil 3 zu öffnen, indem er den Schaltmagneten 13 ansteuert. Das Schaltventil 3 ist in der zwischen der Druckluftversorgung 9 und der Arbeitsleitung 5 verlaufenden Bypass-Leitung 14 angeordnet und sperrt diese in seiner Ruhestellung im stromlosen Zustand ab. In seiner Schaltstellung wird durch das Schaltventil 3 ein zusätzlicher Öffnungsquerschnitt zwischen der Druckluftversorgung 9 und der Arbeitsleitung 5 geöffnet. Die Querschnittsverengung 15 in der Bypass-Leitung 14 dient der Symbolisierung der Charakteristik, dass der schaltbare Leitungsquerschnitt der Bypass-Leitung 14 kleiner ist, als die maximale Öffnungsweite des Proportionalventils 2. Praktisch kann dies sowohl durch die Nennweite des Schaltventils 3, den Querschnitt der Bypass-Leitung 14 oder eine Blende oder Drossel realisiert werden. Die Bedingung, dass der schaltbare Leitungsquerschnitt der Bypass-Leitung 14 kleiner ist als die maximale Öffnungsweite des Proportionalventils 2, muss erfüllt sein, damit die geregelte kombinierte Luftmenge nahtlos gesteigert werden kann.

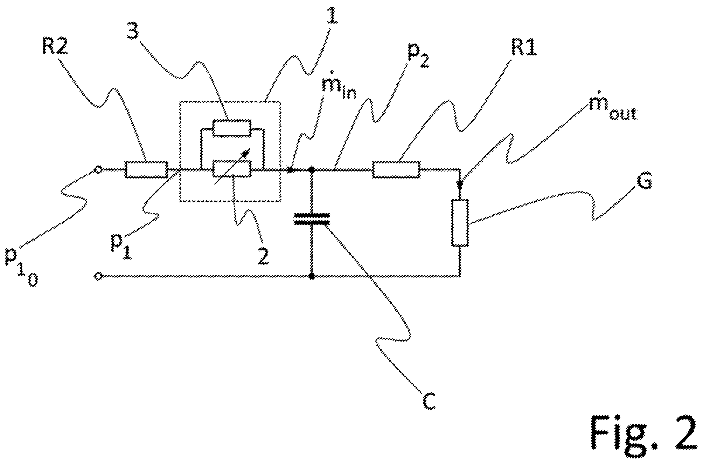

Fig. 2 zeigt ein elektrisches Äquivalenzschaltbild der Ventilanordnung 1 nach Fig. 1 zur Veranschaulichung der bei der Ausgestaltung eines geeigneten technischen Berechnungsmodells zu berücksichtigenden Parameter. Das pneumatische Anwendungssystem wird eingangsseitig von der Druckluftversorgung 9 mit dem Versorgungsdruck $p_{10}$ beaufschlagt. Bis zum Eintritt in die Ventilanordnung 1 unterliegt der Luftstrom dem pneumatischen Widerstand R2, der durch den Querschnitt und die Beschaffenheit der entsprechenden Leitungsführung charakterisiert ist. Die Druckluftversorgung der Ventilanordnung 1 erfolgt versorgungsseitig mit dem Druck $p_1$. Ausgehend von der Ventilanordnung 1 erfolgt die Einleitung von Druckluft in die Arbeitsseite des pneumatischen Anwendungssystems als Massenstrom $\dot{m}_{in}$ mit dem durch die Ventilanordnung 1 geregelten Druck $p_2$. Der Luftstrom unterliegt bis zum Leitungsende dem weiteren pneumatischen Widerstand R1, der durch den Querschnitt und die Beschaffenheit der entsprechenden weiteren Leitungsführung charakterisiert ist. Als Massenstrom $\dot{m}_{out}$ durchläuft der Luftstrom schließlich das als Blende 6 ausgestaltete Leitungsende, wobei die Ausflusscharakteristik der Blende 6 mit dem Leitwert G charakterisierbar ist und führt zur Beaufschlagung des Volumens V, das im elektrischen Äquivalenzschaltbild Fig. 2 als Kondensator C gekennzeichnet ist.

Ausgehend von dem elektrischen Äquivalenzschaltbild Fig. 2 wird nachfolgend ein geeignetes technisches Berechnungsmodell dargestellt: Der durch die Ventilanordnung 1 in die Arbeitsleitung 5 eingeleitete Luftstrom ist allgemein wie folgt als Massenstrom $\dot{m}_{in}$ beschreibbar:

$$\dot{m}_{in} = \Psi\left(p_{1_A}, p_{2_A}\right) \cdot p_1 \cdot \left(f_1(\ldots) \cdot x(t) + f_2(\ldots) \cdot A_V \cdot u(t)\right),$$

mit

$\Psi(p_{1_A}, p_{2_A})$ - Ausflussfunktion,
$f_1(\ldots)$ - Allgemeiner Funktionszusammenhang Proportionalventil 1,
$f_2(\ldots)$ - Allgemeiner Funktionszusammenhang Schaltventil 3,
$x(t)$ - variabler Öffnungsquerschnitt Proportionalventil,
$u(t)$ - Schaltzustand Schaltventil,
$A_V$ - Öffnungsquerschnitt Schaltventil,
$R$ - Allgemeine Gaskonstante,
$\vartheta$ - Temperatur.

Der Druckanstieg $\dot{p}_2$ ist für ein konstantes Arbeitsvolumen V (= Kondensator C im Äquivalenzschaltbild Fig. 2) beschreibbar mit:

$$\dot{p}_2 = \frac{R\vartheta}{V} \cdot (\dot{m}_{in} - \dot{m}_{out}) = \frac{R\vartheta}{C} \cdot \dot{m}_{in} - \frac{R\vartheta}{C} \cdot \frac{G}{R1 \cdot G + 1} \cdot p_2 = c_1 \cdot \dot{m}_{in} - c_2 \cdot p_2 \,,$$

wobei die Größen $c_1$ und $c_2$ für das jeweilige pneumatische Anwendungssystem näherungsweise als Konstanten zu bestimmen sind.

Damit ein vorgebbarer Soll-Arbeitsdruck $p_{CMD}$ mit der Ventilanordnung 1 erreicht werden kann, muss die Bedingung $\dot{m}_{in} > \dot{m}_{out}$ erfüllt sein. Hieraus folgt, dass das Schaltventil 3 stets dann zu öffnen ist, wenn gilt:

$$\dot{m}_{out|p=p_{CMD}} = \frac{G}{R1 \cdot G + 1} \cdot p_{CMD} = c_2 \cdot p_{CMD} > \dot{m}_{in_{max}} = \Psi\left(p_{1_A}, p_{2_A}\right) \cdot p_1 \cdot x_{max} =$$

$$c_3\left(p_{1_A}, p_{2_A}\right) \cdot p_{max} \,,$$

wobei die Größe $c_3$ für die jeweilige pneumatische Anwendungssystem näherungsweise als Konstante zu bestimmen ist.

Damit die geregelte kombinierte geregelte Luftmenge des Proportionalventils 2 und des Schaltventils 3 nahtlos gesteigert werden kann, muss ferner die Bedingung erfüllt sein, dass der schaltbare Leitungsquerschnitt der Bypass-Leitung 14 kleiner ist als die maximale Öffnungsweite des Proportionalventils 2:

$$f_1(\dots) \cdot x_{max} > f_2(\dots) \cdot A_V \,.$$

Mit der Erhöhung des Durchflusses durch das Proportionalventil 2 sinkt der Versorgungsdruck $p_{1_0}$, was vereinfacht wie folgt beschreibbar ist:

$$p_1\left(\dot{m}\left(x\right)\right) = p_{1_0} - a_{p1}\dot{m}(x) \rightarrow p_x(x) \approx p_{1_0} - a_{px} \cdot x \,.$$

Bei abgeschaltetem Schaltventil 3 mit $u = 0$ ändert sich die Gleichung für den in die Arbeitsleitung 5 eingeleiteten Massenstrom $\dot{m}_{in}$ wie folgt:

$$\dot{m}_{in} = \frac{\Psi\left(p_{1_A},p_{2_A}\right) \cdot p_{10} \cdot f_1(\dots) \cdot x(t)}{1+ \Psi\left(p_{1_A},p_{2_A}\right) \cdot a_{p1} \cdot f_1(\dots) \cdot x(t)} \approx \Psi \cdot f_1 \cdot p_1 \cdot x(t) - \Psi \cdot f_1 \cdot a_{px} \cdot x^2(t) \,.$$

Hierauf basierend lässt sich ein geeigneter Berechnungsalgorithmus für den dem Proportionalventil 2 bei maximaler Öffnungsweite maximal erreichbaren Arbeitsdruck wie folgt ableiten:
Aus den dargestellten Gleichungen für den Druckanstieg $\dot{p}_2$ und dem in die Arbeitsleitung 5 bei abgeschaltetem Schaltventil 3 unter Berücksichtigung des Versorgungsdruckabfalls eingeleiteten Massenstrom $\dot{m}_{in}$ resultiert der kalkulierbare Druckanstieg $\dot{p}_2$ vereinfacht in:

$$\dot{p}_2 \approx c_1\left(c_{3_1} \cdot x(t) - c_{3_2} \cdot x^2(t) - c_2 \cdot p_2(t)\right),$$

so dass sich der maximal erreichbaren Arbeitsdruck $p_{2_{max}}$ wie folgt bestimmen lässt:

$$p_{2_{max}} \approx \frac{c_{3_1}}{c_2} \cdot x_{max} - \frac{c_{3_2}}{c_2} \cdot x^2_{max} \,.$$

Die vorstehende Gleichung lässt sich wie folgt diskretisieren

$$p_k = \frac{c_{3_1}}{c_2} \cdot x_k - \frac{c_{3_2}}{c_2} \cdot x^2_k - \frac{1}{c_1 \cdot c_2}\dot{p}_{2_k} \,.$$

Die Ergebnisse der vorstehenden Berechnung werden zur Laufzeit fortlaufend in einem Pufferspeicher akkumuliert. Auf Basis der Pufferdatensammlung werden die für die Betätigung des Schaltventils 3 erforderlichen Parameter $a_0 = \frac{c_{3_1}}{c_2}$ und $a_1 = \frac{c_{3_2}}{c_2}$ zur Abschätzung des maximal erreichbaren Arbeitsdrucks zur Laufzeit fortlaufend als Optimierungsaufgabe

$$J = \frac{1}{2} \min_{a_0,a_1}\{\underline{e}^T \underline{e}\}$$

mit $\underline{e} = \underline{p} - a_0 \cdot \underline{x} + a_1 \cdot \underline{x}^2$ gelöst. Sowohl die Datenakkumulierung als auch die Optimierungsberechnung erfolgen zur Laufzeit als Hintergrundprozesse.
Ausgehend von den vorstehend dargestellten Berechnungsgrundlagen wird der Schaltzeitpunkt zum Öffnen des Schaltventils 3 definiert durch

$$p_{CMD} > p_{2_{max}} = f(p_1, x_{max)} \,.$$

Hiervon ausgehend lassen sich lassen sich zur weiteren Verbesserung des Schaltverhaltens praktisch folgende Schaltregeln formulieren:

Zur Dynamisierung des Schaltverhaltens wird zunächst der allgemeine Parameter $p_{offset}$ eingeführt, mit dem das Schaltverhalten um einen zusätzlichen, vorgebbaren Abweichungswert > 0 zeitlich vorverlagert wird, das Öffnen des Schaltventils also bereits vor dem Unterschreiten des vorgebbaren Soll-Arbeitsdrucks durch den maximal erreichbaren Arbeitsdruck erfolgt:

$$u = \begin{cases} 1, p_{CMD} - p_{offset} \geq p_{2_{max}} \\ 0, otherwise \end{cases}$$

Ein durch häufiges Ein- und Ausschalten bedingtes Prellen der Ventilanordnung 1 lässt sich durch die Einführung einer Schalthysterese mit den zusätzlichen Parametern $p_{thr_{upper}}$ und $p_{thr_{lower}}$ durch die folgenden, das Schaltverhalten stabilisierende Schaltregeln vermeiden:

$$\begin{cases} 1, u_{k-1} = 0 \wedge p_{CMD} - p_{offset} + p_{thr_{upper}} \geq p_{2_{max}} \wedge p_{CMD} > p_2 \\ 1, u_{k-1} = 1 \wedge p_{CMD} - p_{offset} + p_{thr_{lower}} \geq p_{2_{max}} \\ 0, u_{k-1} = 0 \wedge p_{CMD} - p_{offset} + p_{thr_{upper}} < p_{2_{max}} \\ 0, u_{k-1} = 1 \wedge p_{CMD} - p_{offset} + p_{thr_{lower}} \geq p_{2_{max}} \vee p_{CMD} < p_{CMD_{min}} \\ 0, \forall_{k-1} \leq 0 \end{cases}$$

Bei dem Parameter $p_{CMD_{min}}$ handelt es sich um einen zusätzlichen minimalen Sollwert, bei dessen Unterschreitung das Schaltventil abgeschaltet wird und der Solldruck $p_{CMD}$ nur über das Proportionalventil 2 eingestellt wird.

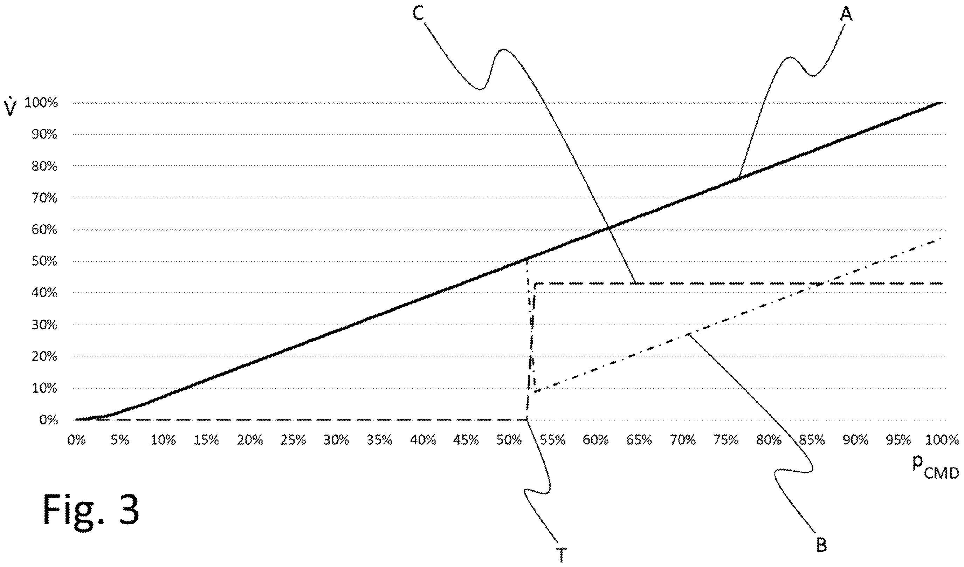

Fig. 3 zeigt ein Diagramm des durch die Ventilanordnung 1 in Abhängigkeit vom vorgebbaren Soll-Arbeitsdruck $p_{CMD}$ geregelten Luftstroms, wobei die Abszissenachse den steigenden Vorgabewert $p_{CMD}$ und die Ordinatenachse die von der Ventilanordnung in die Arbeitsseite des pneumatischen Anwendungssystems abgegebene Luftmenge $\dot{V}$. Die Gerade A zeigt die mit ansteigendem Vorgabewert $p_{CMD}$ von der Ventilanordnung in die Arbeitsseite des pneumatischen Anwendungssystems eingeleitete Gesamtluftmenge. Die Gesamtluftmenge A setzt sich mit steigendem Vorgabewert $p_{CMD}$ zusammen aus der vom Proportionalventil 2 abgegebenen Teilluftmenge B und der vom Schaltventil 3 ab der Öffnung des Schaltventils 3 zum Schaltzeitpunkt T zusätzlich abgegebenen Teilluftmenge C. Bis zum Schaltzeitpunkt T ist die von der Ventilanordnung abgegebene Gesamtluftmenge A identisch mit der durch das Proportionalventil 2 abgegebenen Teilluftmenge B, weshalb der Graph B ausgehend vom Koordinatenursprung bis zum Schaltzeitpunkt T zunächst identisch zur Gerade A verläuft, also mit dieser deckungsgleich ist. Mit der Öffnung des Schaltventils 3 sinkt der Versorgungsdruck $p_{1_0}$, weshalb ab diesem Zeitpunkt zunächst auch die durch das Proportionalventil 2 abgegebene Teilluftmenge B sinkt. Da ab diesem Zeitpunkt gleichzeitig die durch das Schaltventil 3 abgegebene Teilluftmenge C sprungartig ansteigt, steigt die von der Ventilanordnung 1 insgesamt abgegebene kombinierte Gesamtluftmenge A weiter linear an.

**Bezugszeichenliste**

| | |
|---|---|
| 1 | Ventilanordnung |
| 2 | Proportionalventil |
| 3 | Schaltventil |
| 4 | Mikrocontroller |
| 5 | Arbeitsleitung |
| 6 | Blende |
| 7a, 7b | Proportionalmagnet |
| 8a, 8b | Rückstellfeder |
| 9 | Druckluftversorgung |
| 10 | Entlüftung |
| 11 | Drucksensor |
| 12 | Datenkommunikations schnittstelle |
| 13 | Schaltmagnet |
| 14 | Bypass-Leitung |

15     Querschnittsverengung

**Patentansprüche**

1. Ventilanordnung (1) zur Druckregelung eines Fluids, mit einem Proportionalventil (2), aufweisend einen durch ein Stellglied kontinuierlich veränderbaren Öffnungsquerschnitt und ein Sensormittel (11) zur Erfassung des Ventilausgangsdrucks, mit einer digitalen Regelungseinrichtung (4), sowie mit einem parallel zum Proportionalventil (2) angeordneten Schaltventil (3), wobei der Öffnungsquerschnitt des Schaltventils (3) kleiner ist, als der maximale Öffnungsquerschnitt des Proportionalventils (2), **dadurch gekennzeichnet, dass** die Regelungseinrichtung (4) programmtechnisch eingerichtet ist, zur Laufzeit automatisiert anhand des aktuell gegebenen Ventilausgangsdrucks und der aktuellen Position des Stellglieds den bei maximaler Öffnungsweite des Proportionalventils (2) mit diesem maximal erreichbaren Arbeitsdruck zu berechnen und bei einem Unterschreiten eines vorgebbaren Soll-Arbeitsdrucks durch den berechneten, maximal erreichbaren Arbeitsdruck um einen bestimmbaren Abweichungswert zusätzlich das Schaltventil (3) zu öffnen.

2. Ventilanordnung (1) nach Anspruch 1, **dadurch gekennzeichnet, dass** bei der Berechnung des maximal erreichbaren Arbeitsdrucks zusätzlich der pneumatische Widerstand der weiteren Leitungsführung vom Ventilausgang bis zum Leitungsende auf der Arbeitsseite der Ventilanordnung (1) berücksichtigt ist.

3. Ventilanordnung (1) nach Anspruch 1 oder 2, **dadurch gekennzeichnet, dass** bei der Berechnung des maximal erreichbaren Arbeitsdrucks zusätzlich die Ausflusscharakteristik des Leitungsendes auf der Arbeitsseite der Ventilanordnung (1) berücksichtigt ist.

4. Ventilanordnung (1) nach einem der Ansprüche 1 bis 3, **dadurch gekennzeichnet, dass** bei der Berechnung des maximal erreichbaren Arbeitsdrucks zusätzlich der mit der Vergrößerung des Öffnungsquerschnitts des Proportionalventils (2) eintretende Versorgungsdruckabfall berücksichtigt ist.

5. Ventilanordnung (1) nach einem der Ansprüche 1 bis 4, **dadurch gekennzeichnet, dass** zur Stabilisierung des Regelungsverhaltens bei der Bestimmung des Öffnungszeitpunkts des Schaltventils (3) eine Schalthysterese berücksichtigt ist.

6. Verfahren zur Druckregelung eines Fluids durch eine Ventilanordnung (1) mit einem Proportionalventil (2), aufweisend einen durch ein Stellglied kontinuierlich veränderbaren Öffnungsquerschnitt und ein Sensormittel (11) zur Erfassung des Ventilausgangsdrucks, mit einer digitalen Regelungseinrichtung (4), sowie mit einem parallel zum Proportionalventil (2) angeordneten Schaltventil (3), wobei der Öffnungsquerschnitt des Schaltventils (3) kleiner ist, als der maximale Öffnungsquerschnitt des Proportionalventils (2), **dadurch gekennzeichnet, dass** durch die digitale Regelungseinrichtung zur Laufzeit automatisiert anhand des aktuell gegebenen Ventilausgangsdrucks und der aktuellen Position des Stellglieds der bei maximaler Öffnungsweite des Proportionalventils (2) mit diesem maximal erreichbaren Arbeitsdruck berechnet und mit einem vorgebbaren Soll-Arbeitsdruck verglichen wird und bei einem Unterschreiten des vorgebbaren Soll-Arbeitsdrucks durch den berechneten, maximal erreichbaren Arbeitsdruck um einen bestimmbaren Abweichungswert die Generierung einer Stellgröße zur zusätzlichen Öffnung des Schaltventils (3) erfolgt.

7. Verfahren nach Anspruch 6, **dadurch gekennzeichnet, dass** bei der Berechnung des maximal erreichbaren Arbeitsdrucks zusätzlich der pneumatische Widerstand der weiteren Leitungsführung vom Ventilausgang bis zum Leitungsende berücksichtigt ist.

8. Verfahren nach Anspruch 6 oder 7, **dadurch gekennzeichnet, dass** bei der Berechnung des maximal erreichbaren Arbeitsdrucks zusätzlich die Ausflusscharakteristik des Leitungsendes berücksichtigt ist.

9. Verfahren nach einem der Ansprüche 6 bis 8, **dadurch gekennzeichnet, dass** bei der Berechnung des maximal erreichbaren Arbeitsdrucks der mit der Vergrößerung des Öffnungsquerschnitts des Proportionalventils eintretende Versorgungsdruckabfall berücksichtigt ist.

10. Verfahren nach einem der Ansprüche 6 bis 9, **dadurch gekennzeichnet, dass** zur Stabilisierung des Regelungsverhaltens bei der Bestimmung des Öffnungszeitpunkts des Schaltventils eine Schalthysterese berücksichtigt ist.

**Claims**

1. Valve assembly (1) for controlling pressure of a fluid, the valve assembly comprising a proportional valve (2), which has an opening cross-section continuously variable by an actuator and has a sensor means (11) for detecting the valve output pressure, comprising a digital control device (4), and comprising a switching valve (3) arranged in parallel with the proportional valve (2), the opening cross-section of the switching valve (3) being smaller than the maximum opening cross-section of the proportional valve (2), **characterized in that** the control device (4) is programmed to automatically calculate, at runtime, on the basis of the currently given valve output pressure and the current position of the actuator, the maximum operating pressure achievable by the proportional valve (2) at a maximum opening width thereof, and additionally to open the switching valve (3) when the calculated maximum achievable operating pressure does not meet a predeterminable target working pressure by a determinable deviation value.

2. Valve assembly (1) according to claim 1, **characterized in that** when calculating the maximum achievable operating pressure, the pneumatic resistance of the further line routing from the valve outlet to the line end on the operating side of the valve assembly (1) is additionally taken into account.

3. Valve assembly (1) according to claim 1 or 2, **characterized in that** when calculating the maximum achievable operating pressure, the outflow characteristic of the line end on the working side of the valve assembly (1) is additionally taken into account.

4. Valve assembly (1) according to any of claims 1 to 3, **characterized in that** when calculating the maximum achievable operating pressure, the supply pressure drop which occurs with the enlargement of the opening cross-section of the proportional valve (2) is additionally taken into account.

5. Valve assembly (1) according to any of claims 1 to 4,
   **characterized in that** for stabilizing control behavior, a switching hysteresis is taken into account when determining the opening time of the switching valve (3).

6. Method for controlling pressure of a fluid by means of a valve assembly (1) comprising a proportional valve (2), which has an opening cross-section continuously variable by an actuator and has a sensor means (11) for detecting the valve output pressure, comprising a digital control device (4), and comprising a switching valve (3) arranged in parallel with the proportional valve (2), the opening cross-section of the switching valve (3) being smaller than the maximum opening cross-section of the proportional valve (2), **characterized in that** the maximum operating pressure achievable by the proportional valve (2) at a maximum opening width thereof is calculated, at runtime, by the digital control device, on the basis of the currently given valve output pressure and the current position of the actuator and is compared with a predeterminable target operating pressure, and when the calculated maximum achievable operating pressure does not meet the predeterminable target working pressure by a determinable deviation value, a manipulated variable for additional opening of the switching valve (3) is generated.

7. Method according to claim 6, **characterized in that** when calculating the maximum achievable operating pressure, the pneumatic resistance of the further line routing from the valve outlet to the line end is additionally taken into account.

8. Method according to claim 6 or 7, **characterized in that** when calculating the maximum achievable operating pressure, the outflow characteristic of the line end is additionally taken into account.

9. Method according to any of claims 6 to 8, **characterized in that** when calculating the maximum achievable operating pressure, the supply pressure drop which occurs with the enlargement of the opening cross-section of the proportional valve is additionally taken into account.

10. Method according to any of claims 6 to 9, **characterized in that** for stabilizing control behavior when determining the opening time of the switching valve, a switching hysteresis is taken into account.

**Revendications**

1. Agencement de soupapes (1) permettant la régulation de pression d'un fluide, comportant une soupape proportionnelle (2) présentant une section transversale d'ouverture pouvant être modifiée en continu par un élément de réglage et un moyen formant capteur (11) permettant la détection de la pression de sortie de soupape, comportant un dispositif de régulation numérique (4), et comportant une soupape de commutation (3) disposée parallèlement à la soupape proportionnelle (2), dans lequel la section transversale d'ouverture de la soupape de commutation (3) est inférieure à la section transversale d'ouverture maximale de la soupape proportionnelle (2), **caractérisé en ce que** le dispositif de régulation (4) est configuré par programmation pour calculer de manière automatisée, au moment de l'exécution, à l'aide de la pression de sortie de soupape actuellement donnée et de la position actuelle de l'élément de réglage, la pression de travail maximale pouvant être atteinte avec ladite soupape proportionnelle lors de la largeur d'ouverture maximale de la soupape proportionnelle (2) et, lorsque la pression de travail maximale pouvant être atteinte calculée est inférieure à une pression de travail de consigne pouvant être prédéfinie d'une valeur d'écart pouvant être déterminée, pour ouvrir en outre la soupape de commutation (3).

2. Agencement de soupapes (1) selon la revendication 1,
   **caractérisé en ce que,** lors du calcul de la pression de travail maximale pouvant être atteinte, la résistance pneumatique de l'autre guide de conduite de la sortie de soupape jusqu'à l'extrémité de conduite sur le côté de travail de l'agencement de soupapes (1) est en outre prise en compte.

3. Agencement de soupapes (1) selon la revendication 1 ou 2,
   **caractérisé en ce que,** lors du calcul de la pression de travail maximale pouvant être atteinte, la caractéristique d'écoulement de l'extrémité de conduite sur le côté de travail de l'agencement de soupapes (1) est en outre prise en compte.

4. Agencement de soupapes (1) selon l'une des revendications 1 à 3,
   **caractérisé en ce que,** lors du calcul de la pression de travail maximale pouvant être atteinte, la chute de pression d'alimentation survenant avec l'augmentation de la section transversale d'ouverture de la soupape proportionnelle (2) est en outre prise en compte.

5. Agencement de soupapes (1) selon l'une des revendications 1 à 4,
   **caractérisé en ce que,** pour la stabilisation du comportement de régulation, une hystérésis de commutation est prise en compte lors de la détermination de l'instant d'ouverture de la soupape de commutation (3).

6. Procédé permettant la régulation de pression d'un fluide par un agencement de soupapes (1) comportant une soupape proportionnelle (2), présentant une section transversale d'ouverture pouvant être modifiée en continu par un élément de réglage et un moyen formant capteur (11) permettant de détecter la pression de sortie de soupape, comportant un dispositif de commande numérique (4), et comportant une soupape de commutation (3) disposée parallèlement à la soupape proportionnelle (2), dans lequel la section transversale d'ouverture de la soupape de commutation (3) est inférieure à la section transversale d'ouverture maximale de la soupape proportionnelle (2), **caractérisé en ce que,** au moyen du dispositif de régulation numérique, au moment de l'exécution, à l'aide de la pression de sortie de soupape actuellement donnée et de la position actuelle de l'élément de réglage, la pression de travail maximale pouvant être atteinte avec ladite soupape proportionnelle lors de la largeur d'ouverture maximale de la soupape proportionnelle (2) est calculée de manière automatisée et comparée avec une pression de travail de consigne pouvant être prédéfinie et, lorsque la pression de travail maximale pouvant être atteinte calculée est inférieure à la pression de travail de consigne pouvant être prédéfinie d'une valeur d'écart pouvant être déterminée, la génération d'une grandeur de réglage pour l'ouverture supplémentaire de la soupape de commutation (3) est effectuée.

7. Procédé selon la revendication 6, **caractérisé en ce que,** lors du calcul de la pression de travail maximale pouvant être atteinte, la résistance pneumatique de l'autre guide de conduite de la sortie de soupape jusqu'à l'extrémité de conduite est en outre prise en compte.

8. Procédé selon la revendication 6 ou 7, **caractérisé en ce que,** lors du calcul de la pression de travail maximale pouvant être atteinte, la caractéristique d'écoulement de l'extrémité de conduite est en outre prise en compte.

9. Procédé selon l'une des revendications 6 à 8, **caractérisé en ce que,** lors du calcul de la pression de travail maximale pouvant être atteinte, la chute de pression d'alimentation survenant avec l'augmentation de la section transversale d'ouverture de la soupape proportionnelle est prise en compte.

10. Procédé selon l'une des revendications 6 à 9, **caractérisé en ce que,** pour la stabilisation du comportement de régulation, une hystérésis de commutation est prise en compte lors de la détermination de l'instant d'ouverture de la soupape de commutation.

Fig. 1

Fig. 2

Fig. 3

EP 4 073 610 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2013135838 A1
- EP 0666792 B1
- DE 102010035747 A1
- DE 2751743 C2
- US 5329965 A
- US 2005087238 A1
- EP 3699437 A1